# EUROPÄISCHE PATENTSCHRIFT

(11) **EP 1 366 818 B1**
(45) Veröffentlichungstag und Bekanntmachung des Hinweises auf die Patenterteilung: **13.04.2005**
(21) Anmeldenummer: 03011490.4
(22) Anmeldetag: 21.05.2003
(51) Int. Cl.: B01L 3/00, B01J 19/00, G01N 35/10, B01D 11/04

(54) **Vorrichtung, System und Verfahren zum Absaugen von Flüssigkeiten aus Festphasenextraktionsplatten**
Device, system and method to aspirate liquid from solid phase extraction (SPE) plates
Dispositif et méthode d'aspiration de liquides dans des plaques d'extraction en phase solide

(30) Priorität: 31.05.2002 CH 9042002
(43) Veröffentlichungstag der Anmeldung: 03.12.2003
(73) Patentinhaber: Tecan Trading AG, 8708 Männedorf (CH)
(72) Erfinder: Knecht, Urs, 8634 Hombrechtikon (CH); Ingenhoven, Nikolaus, 8713 Uerikon (CH)
(74) Vertreter: OK pat AG

(56) Entgegenhaltungen:
- WO-A-01/07164
- WO-A-01/78896
- DE-A- 10 008 023
- DE-U- 29 722 473
- US-A- 5 141 719
- US-A- 6 133 045
- US-B1- 6 338 802
- US-B1- 6 391 241

## Beschreibung

Die Erfindung betrifft, gemäss dem Oberbegriff des unabhängigen Anspruchs 1 eine Vorrichtung, gemäss dem Oberbegriff des Anspruchs 10 ein entsprechendes System und gemäss dem Oberbegriff des unabhängigen Anspruchs 13 ein Verfahren zum Absaugen von Flüssigkeiten aus Wells und/oder Extraktionsräumen von SPE-Platten für die Festphasenextraktion und Elution von organischen bzw. anorganischen Teilchen.

In Labors, die sich mit molekularbiologischen/biochemischen Untersuchungen beschäftigen, sind die Bereiche "Genomics" oder "Proteomics" gebräuchliche Begriffe für die Bearbeitung und Untersuchung von Erbsubstanzen, wie DNA (Desoxyribonukleinsäure), RNA (Ribonukleinsäure) bzw. deren Teile in Form von Oligonukleotiden oder von Proteinen (Eiweissen, z.B. in Form von Antigenen oder Antikörpern bzw. deren Teile in Form von Polypeptiden) umfassen. Solche und ähnliche Prozesse können eine Vielzahl von Arbeitsschritten in verschiedenen Arbeitsstationen umfassen. Gerade der Bereich Proteomics gewinnt zunehmend an Bedeutung, weil nicht nur das Genom (Erbmasse) sondern vor allem die jeweils vorhandene Proteinausstattung (Proteom) das Aussehen und den Zustand eines biologischen Organismus bestimmen. Diese Erkenntnis führte dazu, dass heute an Stelle des Dogmas "ein Gen - ein Protein - eine Funktion" ein tieferes Verständnis der Proteine als eigentliche Regulationsnetzwerke zu treten hat. Proteomics - die quantitative Analyse der zu einem bestimmten Zeitpunkt und unter bestimmten Bedingungen in einem Organismus vorhandenen Proteine - wird sich deshalb als ein wichtiger Schlüssel zur Funktionsanalyse sowohl in der Grundlagenforschung (z.B. bei der Aufklärung von Reaktions- und Regulationsnetzwerken) als auch bei der angewandten Forschung (z.B. bei der Suche und Auswahl von Targets zur Entwicklung von Medikamenten) profilieren.

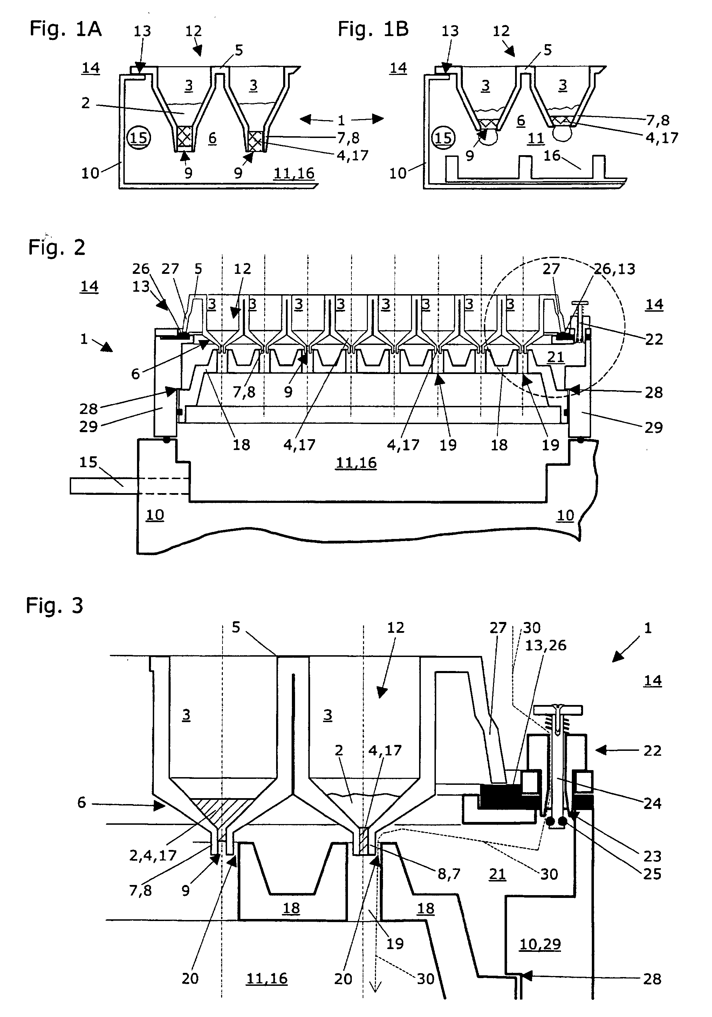

Systeme, welche in der Lage sind, automatisierte Trenn- bzw. Separierungs- oder Reinigungsverfahren durchzuführen, verwenden typischerweise sogenannte "SPE-Platten" (Solid Phase Extraction Plates) zum Bearbeiten von Proben, insbesondere zur Festphasenextraktion und Elution von organischen bzw. anorganischen Teilchen. Dabei wird - je nach dem Anwendungsziel - ein spezifisch aktivierter Filter, ein entsprechendes Gitter oder auch eine Trennkolonne in Form einer gepackten Kapillare in oder zumindest nahe der Bodenauslassöffnung eines Töpfchens oder "Well" einer Mikroplatte platziert (vgl. Fig. 1: SPE-Platten aus dem Stand der Technik). Zur Durchführung eines Trennverfahrens wird eine Probe in ein Well pipettiert und durch Anwendung von Saugkräften (durch Anlegen von Vakuum) oder Schwerkraft (durch Zentrifugation) gezwungen, die Mikroplatte durch den Filter bzw. das Gitter über die Bodenauslassöffnung zu verlassen.

Das Prinzip der Festphasenextraktion kann folgendermassen zusammengefasst werden: Eine Probe wird auf ein festes Sorbens aufgetragen. Das Sorbens adsorbiert oder bindet bestimmte Bestandteile der Probe. Diese Bestandteile werden oft Zielmoleküle genannt, jedoch kann es sich bei solchen Bestandteilen nicht nur um nicht-ionische, sondern auch um ionische oder auch um partikuläre Bestandteile wie Zellen, Zellfragmente, wie Mitochondrien oder Zellkerne, oder auch um Viren handeln. Im folgenden werden deswegen unter dem Begriff "Teilchen" zusammenfassend alle im vorgehenden erwähnten Bestandteile und Zielmoleküle umfasst. Durch die Festphasenextraktion werden nach dem Adsorptionsschritt die übrigen Probenbestandteile von dem mit Zielmolekülen beladenen Sorbens abgetrennt. Anschliessend wird üblicherweise das Sorbens gewaschen. Schliesslich werden die Zielmoleküle (d.h. die Teilchen) von dem festen Sorbens eluiert. Das Eluat enthält eine gereinigte oder konzentrierte Fraktion der Zielmoleküle (d.h. der Teilchen).

Im Verlauf dieses Verfahrens binden somit die Zielmoleküle an das aktivierte Material z.B. der Trennkolonne oder Packung. Nach dem Ausführen einiger Waschschritte und jeweiligem Ableiten des Waschabfalls mittels Vakuum oder Zentrifugation können die Zielmoleküle bzw. die so von der Probe abgetrennten organischen bzw. anorganischen Teilchen mit Hilfe eines Eluents (einem geeigneten Lösungsmittel) eluiert, d.h. von der Packung, vom Filter bzw. vom Gitter getrennt werden. Anschliessend werden die eluierten Teilchen mittels Vakuum oder Zentrifugation in eine zweite Mikroplatte oder auf die Oberfläche eines Trägers übertragen.

Das Absaugen der Flüssigkeiten aus den SPE-Platten ist eher für eine Automatisierung dieser Trenn- bzw. Separierungs- oder Reinigungsverfahren geeignet als eine entsprechende Zentrifugation. Die Umsetzung dieser Aussage in die Praxis erfordert aber das Überwinden mehrerer technischer Hindernisse: Das Leeren aller Wells wird üblicherweise durch plötzliches, abruptes Anlegen von grossem Unterdruck erreicht, was durch schlagartiges Öffnen eines zu einem vorevakuierten Vakuumtank führenden Ventils geschieht. Üblicherweise umfassen SPE-Platten an deren Unterseite für jedes Well einen herausstehenden Auslass (vgl. Fig. 1A). Ein solch plötzliches Anlegen eines Vakuums führt aber oft zu spritzendem oder gar schäumendem Waschabfall, so dass eine Kontamination (Probenübertrag von einem Auslass einer SPE-Platte zu einem benachbarten Auslass) befürchtet werden muss. Quelle für Kontaminationen oder auch für Kreuzkontaminationen können auch an diesen Auslässen hängende Tropfen (vgl. Fig. 1B), die zudem ein eventuell vorhandenes Totvolumen füllen können (vgl. Fig. 1A) sein, welche durch manuelles oder automatisches Manipulieren mit einem Roboter der SPE-Platten hervorgerufene Erschütterungen bzw. Vibrationen von der SPE-Platte abgeschüttelt werden.

Zum Vermeiden des Übertragens von Proben an einen anderen Auslass oder in ein anderes Well der Sammelplatte wird deshalb eine Sammelplatte verwendet, welche eine identische Wellverteilung wie die SPE-Platte aufweist, so dass gerade je ein Auslass der SPE-Platte in je einem Well einer solchen Sammelplatte positioniert wird. Im Stand der Technik sind solche Sammelplatten bekannt, die zwar wirksame Vorrichtungen gegen Spritzen des Waschabfalls umfassen, die aber selbst Anlass zur Kontamination durch an den Auslässen hängende Tropfen geben können.

Aus US 6,133,045 ist ein Probenbehandlungssystem mit einem Saugkörper zur automatischen Extraktion von Verbindungen aus Mikrotiterplatten bekannt. Der dort verwendete Saugkörper dient immer zum Absaugen von Flüssigkeiten aus einer Multiwellplatte und zum Zuleiten dieser Flüssigkeiten in einen Abfallbehälter.

Die Aufgabe der Erfindung besteht darin, eine alternative Vorrichtung bzw. ein alternatives Verfahren zum Absaugen von Flüssigkeiten aus SPE-Platten für die Festphasenextraktion und Elution von organischen bzw. anorganischen Teilchen, vorzuschlagen, welche es erlauben, die Nachteile der als Stand der Technik beschriebenen Vorrichtungen und Verfahren im Wesentlichen zu beheben.

Diese Aufgabe wird bezüglich eines ersten Aspekts mit einer Vorrichtung gemäss den Merkmalen des unabhängigen Anspruchs 1 gelöst. Bezüglich eines zweiten Aspekts wird diese Aufgabe mit einem Verfahren gemäss den Merkmalen des unabhängigen Anspruchs 13 gelöst. Zusätzliche erfindungsgemässe Merkmale ergeben sich aus den abhängigen Ansprüchen.

Zu den Vorteilen der erfindungsgemässen Vorrichtung gegenüber dem Stand der Technik zählen:
- Die Vorrichtung umfasst ein spezielles, bevorzugt durch einen Roboterarm bzw. einen daran angeordneten Greifer mechanisch auslösbares Belüftungsventil, welches im Anschluss an das Waschen der Proben sehr schnell bzw. schlagartig geöffnet werden kann, wodurch - z.B. dank einem vorzugsweise vorgesehenen Vakuumtank der Vorrichtung - ein starker Gasstrom durch den Ringspalt zwischen den Abschirmungsröhrchen und den darin praktisch konzentrisch angeordneten Auslässen der Wells der SPE-Platte entsteht. Dieser Gas- bzw. Luftstrom reisst alle Tropfen des Waschabfalls mit, die allenfalls noch an den Auslässen hängen.

Die folgenden schematischen Zeichnungen sollen den bekannten Stand der Technik dokumentieren. Bevorzugte Ausführungsformen der erfindungsgemässen Vorrichtung werden ebenfalls an Hand von solchen Zeichnungen erläutert, ohne dass dieselben den Umfang der Erfindung einschränken sollen. Dabei zeigen:
- Fig. 1A: einen Vertikal-Teilschnitt durch eine erste Vorrichtung zum Entleeren einer SPE-Platte aus dem Stand der Technik;
- Fig. 1B: einen Vertikal-Teilschnitt durch eine zweite Vorrichtung zum Entleeren einer SPE-Platte aus dem Stand der Technik;
- Fig. 2: einen Vertikal-Teilschnitt durch eine erfindungsgemässe Vorrichtung gemäss einer ersten Ausführungsform;
- Fig. 3: einen vergrösserten Vertikal-Teilschnitt durch eine erfindungsgemässe Vorrichtung gemäss der ersten Ausführungsform, entsprechend dem Kreis in Fig. 2.

Figur 1 zeigt Vertikal-Teilschnitte durch Vorrichtungen zum Entleeren einer SPE-Platte aus dem Stand der Technik. Diese Vorrichtungen 1 sind zum Absaugen von Flüssigkeiten 2 aus Wells 3 von SPE-Platten 5 konzipiert. Diese SPE-Platten 5 sind für die Festphasenextraktion und Elution von organischen bzw. anorganischen Teilchen ausgebildet. Diese Vorrichtungen aus dem Stand der Technik umfassen eine durch Umfassungsmittel 10 begrenzte Saugkammer 11, eine in einem Teil der Umfassungsmittel 10 angeordnete Aufnahmeöffnung 12 mit einem Randbereich 13. Dieser Randbereich 13 ist durch die Beaufschlagung mit zumindest einem Teil dieser SPE-Platten 5 gegen die umgebende Atmosphäre 14 abdichtbar. Als umgebende Atmosphäre 14 gelten im Zusammenhang mit dieser Erfindung Gase, wie Stickstoff und andere inerte Gase sowie Luft und andere Gasgemische, aber auch Flüssigkeiten oder Flüssigkeitsgasgemische, welche nicht über den vorgesehenen Weg, d.h. via die unteren Auslasse 8 der SPE-Platten 5 in die Saugkammer 11 eindringen könnten. Zum Evakuieren der Saugkammer 11 ist eine zu derselben führende und mit einer Saugpumpe (nicht dargestellt) verbindbare Vakuumleitung bzw. Unterdruckleitung 15 vorgesehen. Als Sammelraum 16 dient die Saugkammer 11 (vgl. Fig. 1A) bzw. eine mittels Zwischenwänden unterteilte Schale, in deren Schalenteilen die aus den Auslassöffnungen 9 der SPE-Platte 5 ausgetretenen Flüssigkeiten 2 gesammelt werden sollen (vgl. Fig. 1B). In den Extraktionsräumen 4 werden Trennmittel 17 (oder Sorbens; z.B. Filter) eingesetzt. Wie oben beschrieben, kann das Leeren aller Wells durch plötzliches, abruptes Anlegen von grossem Unterdruck zu spritzendem oder gar schäumendem Waschabfall oder Eluat und damit zu unerwünschten Materialübertragungen in benachbarte Wells bzw. zum Verlust einer Probe, mehrerer oder aller Proben eines Batchs führen.

Figur 2 zeigt eine Vorrichtung 1 zum Absaugen von Flüssigkeiten 2 aus Wells 3 und/oder Extraktionsräumen 4 von SPE-Platten 5 für die Festphasenextraktion und Elution von organischen bzw. anorganischen Teilchen. Diese Extraktionsräume 4 weisen je einen an der Unterseite 6 der Wells 3 angeordneten, eine ringförmige Wand 7 umfassenden Auslass 8 mit einer Auslassöffnung 9 auf. Diese ringförmige Wand 7 kann als Kanüle, als konischer oder auch flacher Boden an der Unterseite 6 der Wells 5 vorgesehen sein und kann eine runde oder eine von der runden Form abweichende Gestalt (z.B. eine quadratische Grundfläche) aufweisen. Dieser Auslauf kann mehr oder weniger unter die Unterseite 6 der SPE-Platte 5, bzw. der Wells 3 herausstehen oder auch als Konus ausgebildet sein (vgl. Fig. 1B). Die Vorrichtung 1 umfasst zumindest eine durch Umfassungsmittel 10 begrenzte Saugkammer 11 und zumindest eine in einem Teil der Umfassungsmittel 10 angeordnete Aufnahmeöffnung 12 mit einem Randbereich 13, der durch die Beaufschlagung mit zumindest einem Teil einer solchen SPE-Platte 5 gegenüber der umgebenden Atmosphäre 14 abdichtbar ist. Vorzugsweise umfasst der Randbereich 13 eine elastische Flachdichtung 26, welche durch den äusseren Rand 27 einer SPE-Platte 5 dichtend beaufschlagbar ist. Die Vorrichtung umfasst zudem zumindest eine zu der Saugkammer 11 führende und mit einer Saugpumpe verbindbare Unterdruckleitung 15 zum Evakuieren der Saugkammer 11. Die erfindungsgemässe Vorrichtung 1 umfasst ausserdem einen Saugkörper 18 mit einer Vielzahl von Saugöffnungen 19, wobei diese Saugöffnungen 19 in Anzahl und Verteilung der Anzahl und Verteilung der Auslassöffnungen 9 der Wells 3 und/oder Extraktionsräume 4 einer auf die Randbereiche 13 gesetzten SPE-Platte 5 entsprechen. Dabei ist die ringförmige Wand 7 jedes dieser Auslasse 8 so gegenüber einer Saugöffnung 19 positionierbar, dass sie mit dieser Saugöffnung 19 zusammen einen Ringspalt 20 bildet. Vorzugsweise sind Saugkörper 18 und SPE-Platte 5 mit dieser Vorrichtung 1 gegenüber einander so anordenbar, dass die ringförmigen Wände 7 der SPE-Platte 5 um ein vorbestimmtes Mass in die Saugöffnungen 19 des Saugkörpers 18 eintauchen. Das an der Saugkammer 11 angelegt Vakuum bewirkt, dass die Waschflüssigkeiten 2 bzw. Waschabfälle aus den Wells 3 und aus den Extraktionsräumen 4 herausgesogen werden und pro Well individuell über die Saugöffnungen 19 direkt in die Saugkammer 11 gelangen, ohne dass das Übertragen von Flüssigkeiten oder Probenteilen von einem Auslass 8 an einen anderen Auslass befürchtet werden muss. Der Ringspalt 20 zwischen der ringförmigen Wand 7 und der Saugöffnung 19 kann permanent offen (vgl. Figuren 2 und 3) sein, wodurch der Zwischenraum 21 und die Saugkammer 11 dauernd miteinander verbunden sind. Alternativ dazu kann dieser Ringspalt 20 auch verschlossen sein (nicht dargestellt), wodurch der Zwischenraum 21 zumindest während dem Absaugen der Waschflüssigkeiten vollständig von der Saugkammer 11 getrennt ist. Der Saugkörper 18 ist vorzugsweise jeweils an die zum Einsatz gelangenden SPE-Platten 5 so angepasst, dass ein im Wesentlichen gleichmässiger Ringspalt 20 entsteht, auch wenn die Auslasse 8 der SPE-Platte 5 nicht rund sein sollten.

Zum Definieren einer bestimmten Position der ringförmigen Wände 7 dieser Auslasse 8 der SPE-Platten 5 gegenüber den Saugöffnungen 19 des Saugkörpers 18 sind der Saugkörper 18 und die Umfassungsmittel 10 in Z-Richtung, also senkrecht zur Horizontalen, vorzugsweise gegeneinander fixierbar, so dass die SPE-Platten für eine automatisierte Bearbeitung derselben immer wieder die exakt gleiche Position einnehmen. Diese Fixierung kann durch einen Anschlag 28 zwischen Saugkörper 18 und Umfassungsmitteln 10 bewerkstelligt werden (vgl. Fig. 2). Alternativ dazu kann der Saugkörper 18 und zumindest ein hier senkrecht gezeichneter Teil 29 der Umfassungsmittel 10 einstückig ausgebildet sein (nicht gezeigt). In beiden Fällen umfasst die Vorrichtung 1 einen Zwischenraum 21, welcher durch den Saugkörper 18, die Unterseite 6 der SPE-Platte 5 und die Umfassungsmittel 10 definiert wird. Das Fluten bzw. Belüften dieses Zwischenraumes 21 mit einem Spül- oder Trenngas ist notwendig, um die SPE-Platte 5 von der Vorrichtung 1 abheben zu können. Dieses Abheben, aber auch ein Einsetzen der SPE-Platte 5 in die Vorrichtung 1 geschieht vorzugsweise mit einem Roboterarm (nicht gezeigt), der vorzugsweise mit zwei Greifern zum beidseitigen Fassen der SPE-Platten ausgerüstet ist.

Zum Fluten des Zwischenraumes 21 mit einem Gas umfassen die Umfassungsmittel 10 ein Belüftungsventil 22, über welches dieses Spülgas (z.B. N₂, CO₂, Ar oder Luft) in den Zwischenraum 21 einleitbar ist. Dieses Belüftungsventil 22 wird bevorzugt durch den Arm eines Roboters zum Transportieren einer SPE-Platte 5 bzw. durch dessen einen Greifer beaufschlagt. Dabei ist speziell bevorzugt, den Greifer so auszubilden und zu führen, dass dieser beim Absenken des Roboterarms unmittelbar vor dem Ergreifen der SPE-Platte das Belüftungsventil öffnet. Das Belüftungsventil 22 umfasst beispielsweise, wie in Figur 3 gezeigt, einen Ventilsitz 23 und einen gefedert angeordneten Ventilkörper 24 mit einer Dichtung 25. Zum Öffnen des Ventils 22 durch einen Roboter zum Transportieren einer SPE-Platte 5 ist diese Dichtung 25 mit dem Ventilkörper 24 im Wesentlichen senkrecht vom Ventilsitz 23 abhebbar. Alternative Ventile, wie etwa solche mit einem Kipphebelmechanismus oder andere Varianten, bei denen der Ventilkörper 24 des Belüftungsventils 22 durch einen Arm des Roboters bzw. einen seiner Greifer zum Transportieren einer SPE-Platte 5 nach unten drückbar ausgebildet ist und die durch den Roboterarm auslösbar sind, wird ein Fachmann in Kenntnis der vorliegende Erfindung ohne Weiteres vorschlagen und gehören somit zum Umfang dieser Erfindung. .

Bevorzugt umfasst ein System zum automatischen Bearbeiten von Proben, das ausserdem eine Vakuumpumpe und damit alle notwendigen Zuleitungen bzw. Verteilungen und Ventile umfasst, eine oder mehrere der eben beschriebenen Vorrichtungen 1. Solche System umfassen zudem bevorzugt zumindest einen Roboterarm sowie Steuerungen und Antriebe zum Betrieb dieser Roboterarme und deren Greifer. Zudem umfasst ein solches System bevorzugt auch zumindest einen Pipettier- und/oder Dispensierautomat zum Einfüllen der Flüssigkeiten 2 in die Wells der SPE-Platten 5. Zum Überwachen des Prozesses und der Roboterbewegungen eignet sich ein Computer mit einer entsprechend angepassten Software, welcher auch einen Bildschirm zum Anzeigen von Arbeitsstatus und/oder von Parametern einzelner Verfahrens-Schritte oder ganzer Protokolle umfasst.

Zur Durchführung des erfindungsgemässen Verfahrens zum Absaugen von Flüssigkeiten 2 aus Wells 3 und/oder Extraktionsräumen 4 von SPE-Platten 5 für die Festphasenextraktion und Elution von organischen bzw. anorganischen Teilchen wird eine Vorrichtung 1 gemäss Anspruch 1 verwendet, wobei diese Vorrichtung 1 einen Zwischenraum 21 umfasst, welcher durch den Saugkörper 18, die Unterseite der SPE-Platte 5 und die Umfassungsmittel 10 definiert wird, und wobei der Saugkörper 18 dichtend an den Umfassungsmitteln 10 angeordnet ist. Das Verfahren ist durch den Verfahrensschritt gekennzeichnet, gemäss welchem nach dem Absaugen von Flüssigkeiten 2 aus den Wells 3 und/oder Extraktionsräumen 4 von SPE-Platten 5 ein Spülgas über ein Belüftungsventil 22, das die Umfassungsmittel 10 umfassen, in diesen Zwischenraum 21 eingeleitet wird.

Vorzugsweise wird dieses Verfahren in einem automatisierten System ausgeführt. Dabei wird zwischen zwei grundsätzlichen Alternativen unterschieden: Gemäss einer ersten Variante werden der Saugkörper 18 und die SPE-Platte 5 mit dieser Vorrichtung 1 gegenüber einander so angeordnet, dass die ringförmigen Wände 7 der SPE-Platte 5 um ein vorbestimmtes Mass in die Saugöffnungen 19 des Saugkörpers 18 eintauchen, so dass die Ringspalten 20 offen sind. Somit kann nach dem Waschen das Belüftungsventil 22 geöffnet; ein Spülgas in den Zwischenraum 21 eingeleitet und - entsprechend dem gestrichelten Pfeil 30 in Fig. 3 - dadurch ein grosser Gasstrom in den permanent offenen Ringspalten 20 erzeugt werden. Dieser durch die Enge der Ringspalten 20 noch beschleunigte Gasstrom dient dazu, eventuell noch an den Auslässen 8 hängende Tropfen zu erfassen und durch die Saugöffnungen 19 abzuziehen.

Gemäss einer zweiten Variante werden der Saugkörper 18 und die SPE-Platte 5 mit dieser Vorrichtung 1 gegenüber einander so angeordnet, dass die ringförmigen Wände 7 der SPE-Platte 5 um ein vorbestimmtes Mass in die Saugöffnungen 19 des Saugkörpers 18 eintauchen, so dass die Ringspalten 20 geschlossen sind. Somit kann nach dem Waschen das Belüftungsventil 22 geöffnet und ein Spülgas in den Zwischenraum 21 eingeleitet werden, bis dort atmosphärische Druckbedingungen herrschen. Darauf wird die SPE-Platte 5 abgehoben und dadurch ein grosser Gasstrom - entsprechend dem gestrichelten Pfeil 30 in Fig. 3 - in den sich erst jetzt öffnenden Ringspalten 20 erzeugt. Dieser durch die anfängliche Enge der Ringspalten 20 noch beschleunigte Gasstrom dient ebenfalls dazu, eventuell noch an den Auslässen 8 hängende Tropfen zu erfassen und durch die Saugöffnungen 19 abzuziehen.

In beiden Fällen wird das Öffnen des Belüftungsventils 22 und/oder das Abheben der SPE-Platte 5 vorzugsweise durch einen Arm eines Roboters zum Transportieren der SPE-Platte 5 ausgeführt.

Das bevorzugte Anschliessen eines "Vakuumspeichers", d.h. einer Kammer (nicht dargestellt), welche ein im Verhältnis zum Gesamtvolumen der Saugkammer 11 mehrfach grösseres Volumen aufweist, verhindert das Auftreten von plötzlichen zu hohen Druckstössen. Dadurch kann der Unterdruck auf einfache Art und Weise konstant unterhalb des Grenzwertes gehalten und auf die Verwendung einer leistungsfähigeren und teureren Pumpe verzichtet werden.

Vorzugsweise weist die Vorrichtung eine modulare Bauweise auf, so dass Einzelteile jederzeit ausgetauscht bzw. für einen anderen Zweck und in Kombination mit weiteren hier nicht dargestellten Bauteilen weiterverwendet werden können. So kann ein automatisches System beispielsweise mehrere Stationen umfassen, welche wahlweise mit den oben beschriebenen Saugkörpern oder mit anderen Vorrichtungen, wir z.B. Elutionsplatten zum Aufbringen von Proben auf Objektträger oder Targets für die Mikroskopie oder für die Analyse bestückt sein können. Der Fachmann wird solche Zuordnungen unter verschiednen Gesichtspunkten vornehmen, so spielen jeweils die Funktionssicherheit, die Herstellungskosten und die Servicefreundlichkeit bzw. Austauschbarkeit der einzelnen Teile sowie das Durchführen eines optimierten Prozessablaufs vom Zugeben der Proben, über deren Bearbeitung bis zum Eluieren der entsprechenden Isolate und deren Abgabe direkt auf die Oberfläche eines praktisch beliebigen Targets (z.B. für MALDI - MS, Fluorometrie etc.) eine wichtige Rolle. Auch die zum Durchführen gewisser Arbeitsschritte notwendige Zeit kann einen Einfluss auf die Anzahl und Verteilung der Arbeitsstationen haben.

Zusätzliche Verbesserung- bzw. Kombinationsmöglichkeiten ergeben sich dadurch, dass der Randbereich 13 eine elastische Flachdichtung 26 umfasst. Zum Verbessern der dichtenden Wirkung umfasst die Vorrichtung 1 vorzugsweise zusätzliche Pressmittel (nicht dargestellt), welche den äusseren Rand der SPE-Platte 5 auf diese Flachdichtung 26 drücken.

Zudem kann ein Deckel zum Abdecken der Wells 3 der SPE-Platte vorgesehen sein (nicht gezeigt), welcher wahlweise an einem als zusätzliches Pressmittel ausgebildeten Roboterarm angebracht und mit diesem zusammen auf die SPE-Platte abgesenkt und/oder von dieser SPE-Platte entfernt werden kann. Dieser Deckel weist bevorzugt zumindest eine Dichtung auf, mit welcher die SPE-Platte dichtend im ganzen oder individuell pro Well beaufschlagt werden kann. Wenn SPE-Platten 5 mit grossen Auslassöffnungen 9 verwendet werden, so weisen die eingesetzten Trennmittel 17 (z.B. Filter oder Gitter) oft einen unterschiedlichen Flusswiderstand für das Waschmittel bzw. das Eluat auf, so dass - falls Vakuum zum Leeren der SPE-Platten verwendet wird - einige Wells schneller als andere geleert werden. Der Flusswiderstand für die nachfliessende Luft ist in den eben geleerten Wells wesentlich kleiner als der Flusswiderstand für die Flüssigkeiten in den noch nicht geleerten Wells; dies führt zu einem unerwünschten und unkontrollierbaren Druckanstieg im Vakuum. Das Leeren aller Wells wird deshalb üblicherweise durch plötzliches, abruptes Anlegen von grossem Unterdruck erreicht, was durch schlagartiges Öffnen eines zu einem vorevakuierten Vakuumtank führenden Ventils geschieht. Dies wiederum kann zum Übertragen von Proben an die Auslässe 8 der Nachbarwells und damit zum Kontaminieren von Nachbarproben führen. Durch dichtendes Auflegen bzw. Aufpressen eines solchen Deckels wird die Menge der nachfliessenden Luft limitiert und damit beim Öffnen des Belüftungsventils 22 ein grosser Gasstrom erzeugt, der dazu dient, eventuell noch an den Auslässen 8 hängende Tropfen zu erfassen und durch die Saugöffnungen 19 abzuziehen.

In den Figuren sind gleiche Teile mit den gleichen Bezugszeichen versehen, dabei gelten die entsprechenden Bezeichnungen, auch wenn sie nicht in jedem Fall ausdrücklich aufgeführt bzw. besprochen sind. Beliebige Kombinationen der gezeigten bzw. beschriebenen Merkmale sind Bestandteil der vorliegenden Erfindung.

## Patentansprüche

1. Vorrichtung (1) zum Absaugen von Flüssigkeiten (2) aus Wells (3) und/oder Extraktionsräumen (4) von SPE-Platten (5) für die Festphasenextraktion und Elution von organischen bzw. anorganischen Teilchen - wobei diese Extraktionsräume (4) je einen an der Unterseite (6) der Wells (3) angeordneten, eine ringförmige Wand (7) umfassenden Auslass (8) mit einer Auslassöffnung (9) aufweisen - umfassend:
• zumindest eine durch Umfassungsmittel (10) begrenzte Saugkammer (11);
• zumindest eine in einem Teil der Umfassungsmittel (10) angeordnete Aufnahmeöffnung (12) mit einem Randbereich (13), der durch die Beaufschlagung mit zumindest einem Teil einer solchen SPE-Platte (5) gegenüber der umgebenden Atmosphäre (14) abdichtbar ist;
• zumindest eine zu der Saugkammer (11) führende und mit einer Saugpumpe verbindbare Unterdruckleitung (15) zum Evakuieren der Saugkammer (11),
• einen Saugkörper (18) mit einer Vielzahl von Saugöffnungen (19), wobei diese Saugöffnungen (19) in Anzahl und Verteilung der Anzahl und Verteilung der Auslassöffnungen (9) der Wells (3) und/oder Extraktionsräume (4) einer auf die Randbereiche (13) gesetzten SPE-Platte (5) entsprechen, und wobei die ringförmige Wand (7) jeder dieser Auslasse (8) so gegenüber einer Saugöffnung (19) positionierbar ist, dass sie mit dieser Saugöffnung (19) zusammen einen Ringspalt (20) bildet,
**dadurch gekennzeichnet, dass** die Vorrichtung (1) einen ausschliesslich über die Saugöffnungen (19) evakuierbaren Zwischenraum (21) umfasst, welcher durch den Saugkörper (18), die Unterseite der SPE-Platte (5) und die Umfassungsmittel (10) definiert wird, wobei der Saugkörper (18) dichtend an den Umfassungsmitteln (10) angeordnet ist, und wobei die Umfassungsmittel (10) ein Belüftungsventil (22) umfassen, über welches ein Spülgas direkt in diesen Zwischenraum (21) einleitbar ist.

2. Vorrichtung nach Anspruch 1, **dadurch gekennzeichnet, dass** der Saugkörper (18) und die SPE-Platte (5) mit dieser Vorrichtung (1) gegenüber einander so anordenbar sind, dass die ringförmigen Wände (7) der SPE-Platte (5) um ein vorbestimmtes Mass in die Saugöffnungen (19) des Saugkörpers (18) eintauchen.

3. Vorrichtung nach Anspruch 1 oder 2, **dadurch gekennzeichnet, dass** das Belüftungsventil (22) zu dessen Öffnen durch einen Arm eines Roboters zum Transportieren einer SPE-Platte (5) beaufschlagbar ist.

4. Vorrichtung nach Anspruch 1, 2 oder 3, **dadurch gekennzeichnet, dass** das Belüftungsventil (22) einen Ventilsitz (23) und einen gefedert angeordneten Ventilkörper (24) mit einer Dichtung (25) umfasst, wobei die Dichtung (25) - zum Öffnen des Ventils durch einen Arm eines Roboters zum Transportieren einer SPE-Platte (5) - im Wesentlichen senkrecht vom Ventilsitz abhebbar ist.

5. Vorrichtung nach Anspruch 4, **dadurch gekennzeichnet, dass** der Ventilkörper (24) des Belüftungsventils (22) durch einen Arm des Roboters zum Transportieren einer SPE-Platte (5) nach unten drückbar ausgebildet ist.

6. Vorrichtung nach einem der vorhergehenden Ansprüche, **dadurch gekennzeichnet, dass** der Ringspalt (20) zwischen der ringförmigen Wand (7) und der Saugöffnung (19) permanent offen ist und **dadurch** der Zwischenraum (21) und die Saugkammer (11) dauernd miteinander verbunden sind.

7. Vorrichtung nach einem der vorhergehenden Ansprüche, **dadurch gekennzeichnet, dass** der Randbereich (13) eine elastische Flachdichtung (26) umfasst, welche durch den äusseren Rand (27) einer SPE-Platte (5) dichtend beaufschlagbar ist.

8. Vorrichtung nach einem der vorhergehenden Ansprüche, **dadurch gekennzeichnet, dass** - zum Definieren einer bestimmten Position der ringförmigen Wände (7) dieser Auslasse (8) der SPE-Platten (5) gegenüber den Saugöffnungen (19) des Saugkörpers (18) - der Saugkörper (18) und die Umfassungsmittel (10) in Z-Richtung gegeneinander fixierbar oder dass der Saugkörper (18) und zumindest ein Teil der Umfassungsmittel (10) einstükkig ausgebildet sind.

9. Vorrichtung nach einem der vorhergehenden Ansprüche, **dadurch gekennzeichnet, dass** sie zumindest einen Deckel umfasst, der zum dichtenden Beaufschlagen einer auf die Randbereiche (13) gesetzten SPE-Platte (5) ausgebildet ist.

10. System zum automatischen Bearbeiten von Proben, welches eine Vakuumpumpe umfasst, **dadurch gekennzeichnet, dass** das System eine oder mehrere Vorrichtungen gemäss einem der Ansprüche 1 bis 9 umfasst.

11. System nach Anspruch 10, **dadurch gekennzeichnet, dass** es zumindest einen Roboterarm sowie Steuerungen und Antriebe zum Betrieb dieser Roboterarme umfasst.

12. System nach einem der Ansprüche 10 oder 11, **dadurch gekennzeichnet, dass** es zudem zumindest einen Pipettier- und/oder Dispensierautomat umfasst.

13. Verfahren zum Absaugen von Flüssigkeiten (2) aus Wells (3) und/oder Extraktionsräumen (4) von SPE-Platten (5) für die Festphasenextraktion und Elution von organischen bzw. anorganischen Teilchen - wobei diese Extraktionsräume (4) je einen an der Unterseite (6) der Wells (3) angeordneten, eine ringförmige Wand (7) umfassenden Auslass (8) mit einer Auslassöffnung (9) aufweisen und eine Vorrichtung (1) verwendet wird, welche zumindest eine durch Umfassungsmittel (10) begrenzte Saugkammer (11); zumindest eine in einem Teil der Umfassungsmittel (10) angeordnete Aufnahmeöffnung (12) mit einem Randbereich (13), der durch die Beaufschlagung mit zumindest einem Teil einer solchen SPE-Platte (5) gegenüber der umgebenden Atmosphäre (14) abdichtbar ist und zumindest eine zu der Saugkammer (11) führende, mit einer Saugpumpe verbindbare Unterdruckleitung (15) zum Evakuieren der Saugkammer (11) und einen Saugkörper (18) mit einer Vielzahl von Saugöffnungen (19) umfasst, wobei diese Saugöffnungen (19) in Anzahl und Verteilung der Anzahl und Verteilung der Auslassöffnungen (9) der Wells (3) und/oder Extraktionsräume (4) einer auf die Randbereiche (13) gesetzten SPE-Platte (5) entsprechen, und wobei die ringförmige Wand (7) jeder dieser Auslasse (8) so gegenüber einer Saugöffnung (19) positionierbar ist, dass sie mit dieser Saugöffnung (19) zusammen einen Ringspalt (20) bildet, **dadurch gekennzeichnet, dass** die Vorrichtung (1) einen ausschliesslich über die Saugöffnungen (19) evakuierbaren Zwischenraum (21) umfasst, welcher durch den Saugkörper (18), die Unterseite der SPE-Platte (5) und die Umfassungsmittel (10) definiert wird, wobei der Saugkörper (18) dichtend an den Umfassungsmitteln (10) angeordnet ist, und wobei nach dem Absaugen von Flüssigkeiten (2) aus den Wells (3) und/oder Extraktionsräumen (4) von SPE-Platten (5) ein Spülgas über ein Belüftungsventil (22), das die Umfassungsmittel (10) umfassen, direkt in diesen Zwischenraum (21) eingeleitet wird.

14. Verfahren nach Anspruch 13, **dadurch gekennzeichnet, dass** eine Vorrichtung (1) nach einem der Ansprüche 2 bis 9 oder ein System nach einem der Ansprüche 10 bis 12 verwendet wird.

15. Verfahren nach Anspruch 13 oder 14, **dadurch gekennzeichnet, dass** der Saugkörper (18) und die SPE-Platte (5) mit dieser Vorrichtung (1) gegenüber einander so angeordnet werden, dass die ringförmigen Wände (7) der SPE-Platte (5) um ein vorbestimmtes Mass in die Saugöffnungen (19) des Saugkörpers (18) eintauchen, so dass die Ringspalten (20) offen oder geschlossen sind.

16. Verfahren nach Anspruch 15, **dadurch gekennzeichnet, dass** nach dem Waschen das Belüftungsventil (22) geöffnet; ein Spülgas in den Zwischenraum (21) eingeleitet und **dadurch** ein grosser Gasstrom in den permanent offenen Ringspalten (20) erzeugt wird.

17. Verfahren nach Anspruch 15, **dadurch gekennzeichnet, dass** nach dem Waschen das Belüftungsventil (22) geöffnet; ein Spülgas in den Zwischenraum (21) eingeleitet wird, bis dort atmosphärische Druckbedingungen herrschen; die SPE-Platte (5) abgehoben und **dadurch** ein grosser Gasstrom in den sich erst jetzt öffnenden Ringspalten (20) erzeugt wird.

18. Verfahren nach einem der Ansprüche 16 oder 17, **dadurch gekennzeichnet, dass** das Öffnen des Belüftungsventils (22) und/oder das Abheben der SPE-Platte (5) durch einen Arm eines Roboters zum Transportieren der SPE-Platte (5) ausgeführt wird.

## Claims

1. Device (1) for aspiration of fluids (2) from wells (3) and/or extraction chambers (4) of SPE plates (5) for solid phase extraction and elution of organic or inorganic particles, each of these extraction chambers (4) possessing a ring-shaped wall (7) incorporating an outlet (8) with outlet openings (9) on the underside (6) of the wells (3), comprising:
• at least one suction chamber (11) delimited by means of enclosure (10);
• at least one sampling opening (12) in the means of enclosure (10) with an edge zone (13) which can be sealed off from the surrounding atmosphere (14) by superimposition of at least a part of such an SPE plate (5);
• at least one negative pressure duct (15) leading to the suction chamber (11) and capable of being connected to a suction pump for evacuation of the suction chamber (11);
• a suction element (18) with a plurality of suction openings (19) these suction openings (19) corresponding in number and distribution to the number and distribution of the outlet openings (9) of the wells (3) and/or extraction chambers (4) of an SPE plate (5) placed on the edge zones (13), and the ring-shaped wall (7) of each of these outlets (8) being positionable with respect to this suction opening (19) so that a ring-shaped gap (20) is formed;
**characterized in that** the device (1) includes an intermediate chamber (21), which can be evacuated solely through the suction openings (19), defined by the suction element (18), the underside of the SPE plate (5) and the means of enclosure (10), the suction element (18) being arranged hermetically sealed to the means of enclosure (10), and the means of enclosure (10) incorporating a ventilating valve (22) through which a flushing gas can be admitted directly into this intermediate chamber (21).

2. Device according to Claim 1, **characterized in that** the suction element (18) and the SPE plate (5) can be so arranged with respect to each other with this device (1) that the ring-shaped walls (7) of the SPE plate (5) penetrate a predetermined distance into the suction openings (19) of the suction element (18).

3. Device according to Claim 1 or 2, **characterized in that** the ventilating valve (22) can be actuated by a robot arm for the transport of SPE plates (5) to open it.

4. Device according to Claim 1, 2 or 3, **characterized in that** the ventilating valve (22) comprises a valve seat (23) and a spring loaded valve body (24) with a seal (25), such that this seal (25), with which the valve can be opened by a robot arm for the transport of SPE plates (5), can be removed from the valve seat in an essentially vertical direction.

5. Device according to Claim 4, **characterized in that** the spring loaded valve body (24) of the ventilating valve (22) is designed so that it can be pressed down by a robot arm for transport of an SPE plate (5).

6. Device according to one of the above Claims, **characterized in that** the ring-shaped gap (20) between the ring-shaped wall (7) and the suction opening (19) remains permanently open so that the intermediate chamber (21) and the suction chamber (11) are in permanent communication.

7. Device according to one of the above Claims, **characterized in that** the edge zone (13) possesses an elastic flat seal (26) which can be put in place to form a hermetic seal by the outer edge (27) of an SPE plate (5).

8. Device according to one of the above Claims, **characterized in that**, for the purpose of defining a given position of the ring-shaped walls (7) of these outlets (8) of the SPE plates (5) with respect to the suction openings (19) of the suction element (18), either the said suction element (18) and the means of enclosure (10) can be fixed relative to each other in the direction of the Z axis or the suction element (18) and at least a part of the means of enclosure (10) are constructed in one piece.

9. Device according to one of the above Claims, **characterized in that** it comprises at least one lid designed so as to able to be placed, thus forming a hermetic seal, on an SPE plate (5) resting on the edge zones (13).

10. System for the automatic processing of samples including a vacuum pump, **characterized in that** the system comprises one or more devices according to one of Claims 1 to 9.

11. System according to Claim 10, **characterized in that** it includes at least one robot arm together with control system and drives for the operation of such an arm.

12. System according to one of Claims 10 or 11, **characterized in that** it includes at least one automatic pipetter and/or dispenser.

13. Procedure for the aspiration of fluids (2) from wells (3) and/or extraction chambers (4) of SPE plates (5) for the solid phase extraction and elution of organic or inorganic particles, whereby each of these extraction chambers (4) displays an outlet (8) including a ring-shaped wall (7) with an outlet opening (9) located on the underside (6) of the wells (3), and a device (1) is used having at least one suction chamber (11) delimited by a means of enclosure (10); at least one sampling opening (12) made in the means of enclosure (10) with an edge zone (13) which can be hermetically sealed off from the surrounding atmosphere (14) by the superimposition of at least a part of such an SPE plate (5), and at least one negative pressure duct (15) leading to the suction chamber (11) and capable of being connected to a suction pump for evacuation of the suction chamber (11), and a suction element (18) with a plurality of suction openings (19), such that these suction openings (19) correspond in number and distribution to the number and distribution of the outlet openings (9) of the wells (3) and/or extraction chambers (4) of an SPE plate (5) placed on the edge zones (13), and the ring-shaped wall (7) of each of these outlets (8) being positionable with respect to this suction opening (19) so that a ring-shaped gap (20) is formed, **characterized in that** the device (1) includes an intermediate chamber (21), which can be evacuated solely through the suction openings (19), defined by the suction element (18), the underside of the SPE plate (5) and the means of enclosure (10), the suction element (18) being arranged hermetically sealed to the means of enclosure (10), and after the aspiration of fluids (2) from the wells (3) and/or extraction chambers (4) of SPE plates (5), a flushing gas is admitted through a ventilating valve (22) incorporated in the means of enclosure (10) directly into this intermediate chamber (21).

14. Procedure according to Claim 13, **characterized in that** a device (1) according to one of Claims 2 to 9 or a system according to one of Claims 10 to 12 is employed.

15. Procedure according to Claim 13 or 14, **characterized in that** the suction element (18) and the SPE plate (5) with this device (1) can be so arranged with respect to each other that the ring-shaped walls (7) of the SPE plate (5) penetrate a predetermined distance into the suction openings (19) of the suction element (18), so that the ring-shaped gaps (20) are open or closed.

16. Procedure according to Claim 15, **characterized in that** after washing, the ventilating valve (22) is opened, a flushing gas is admitted into the intermediate chamber (21) and a powerful stream of gas is thereby engendered, flowing into the permanently open ring-shaped gaps (20).

17. Procedure according to Claim 15, **characterized in that** after washing, the ventilating valve (22) is opened, a flushing gas is admitted into the intermediate chamber (21) until atmospheric pressure conditions are attained inside it, the SPE plate (5) is removed and a powerful stream of gas is thereby engendered, flowing into the ring-shaped gaps (20) as they now open.

18. Procedure according to one of Claims 16 or 17, **characterized in that** the opening of the ventilating valve (22) and/or the removal of the SPE plate (5) are performed by a robot arm for transport of the SPE plate (5).

## Revendications

1. Dispositif (1) destiné à aspirer des fluides (2) depuis des puits (3) et/ou des espaces d'extraction (4) de plaques SPE (5), pour l'extraction en phase solide et l'élution de particules organiques ou inorganiques - ces espaces d'extraction (4) présentant chacun, disposée au niveau de la face inférieure (6) des puits (3), une sortie (8), comportant une paroi annulaire (7), avec ouverture de sortie (9) - comportant :
- au moins une chambre d'aspiration délimitée par des moyens périphériques (10) ;
- au moins une ouverture de réception (12), disposée dans une partie des moyens périphériques (10), avec une zone de bordure (13), qui peut permettre une étanchéification vis-à-vis de l'atmosphère environnante (14) par l'application d'au moins une partie d'une telle plaque SPE (5) ;
- au moins une conduite de dépression (15) menant à la chambre d'aspiration (11) et pouvant être reliée à une pompe d'aspiration, permettant de faire le vide dans la chambre d'aspiration (11) ;
- un corps d'aspiration (18) comportant plusieurs ouvertures d'aspiration (19), ces ouvertures d'aspiration (19) correspondant, pour ce qui est du nombre et de la répartition, au nombre et à la répartition des ouvertures de sortie (9) des puits (3) et/ou des espaces d'extraction (4) d'une plaque SPE (5) placée sur les zones de bordure (13), et où la paroi annulaire (7) de chacune de ces sorties (8) peut être positionnée par rapport à une ouverture d'aspiration (19) de façon telle qu'elle forme avec cette ouverture d'aspiration (19) une fente annulaire (20),
**caractérisé en ce que** le dispositif (1) comprend un espace intermédiaire (21) dans lequel on peut faire le vide exclusivement par les ouvertures d'aspiration (19), lequel espace intermédiaire est défini par le corps d'aspiration (18), la partie inférieure de la plaque SPE (5) et les moyens périphériques (10), où le corps d'aspiration (18) est disposé au niveau des moyens périphériques (10) de façon à permettre une étanchéité, et où les moyens périphériques (10) comportent une soupape d'aération (22) par laquelle un gaz de balayage peut être introduit directement dans cet espace intermédiaire (21).

2. Dispositif selon la revendication 1, **caractérisé en ce que** le corps d'aspiration (18) et la plaque SPE (5) avec ce dispositif (1) peuvent être disposés l'un par rapport à l'autre de façon telle que les parois annulaires (7) de la plaque SPE (5) plongent dans les ouvertures d'aspiration (19) du corps d'aspiration (18) selon une étendue prédéfinie.

3. Dispositif selon la revendication 1 ou 2, **caractérisé en ce que** la soupape d'aération (22) peut être actionnée pour son ouverture par un bras d'un robot destiné au transport d'une plaque SPE (5).

4. Dispositif selon la revendication 1, 2 ou 3, **caractérisé en ce que** la soupape d'aération (22) comprend un siège de soupape (23) et un corps de soupape (24) disposé en étant chargé par ressort, ayant une garniture (25), la garniture (25) - pour ouvrir la soupape par un bras d'un robot destiné au transport d'une plaque SPE (5) - pouvant être enlevée du siège de soupape de façon essentiellement verticale.

5. Dispositif selon la revendication 4, **caractérisé en ce que** le corps de soupape (24) de la soupape d'aération (22) est formé de façon à pouvoir être comprimé vers le bas par un bras du robot destiné au transport d'une plaque SPE (5).

6. Dispositif selon l'une des revendications précédentes, **caractérisé en ce que** la fente annulaire (20) entre la paroi annulaire (7) et l'ouverture d'aspiration (19) est ouverte de façon permanente, et que l'espace intermédiaire (21) et la chambre d'aspiration (11) sont de ce fait reliés l'un à l'autre de façon permanente.

7. Dispositif selon l'une des revendications précédentes, **caractérisé en ce que** la zone de bordure (13) comprend une garniture plane (26) élastique qui peut être chargée de façon à permettre l'étanchéité par le bord extérieur (27) d'une plaque SPE (5).

8. Dispositif selon l'une des revendications précédentes, **caractérisé en ce que** - pour définir une position déterminée des parois annulaires (7) de ces sorties (8) des plaques SPE (5) par rapport aux ouvertures d'aspiration (19) du corps d'aspiration (18) - le corps d'aspiration (18) et les moyens périphériques (10) peuvent être fixés l'un par rapport à l'autre dans la direction Z ou **en ce que** le corps d'aspiration (18) et au moins une partie des moyens périphériques (10) sont formés d'une seule pièce.

9. Dispositif selon l'une des revendications précédentes, **caractérisé en ce qu'**il comprend au moins un couvercle qui est formé pour permettre l'étanchéité d'une plaque SPE (5) placée sur les zones de bordure (13).

10. Système de traitement automatique d'échantillons qui comprend une pompe à vide, **caractérisé en ce que** le système comprend un ou plusieurs dispositifs selon l'une des revendications 1 à 9.

11. Système selon la revendication 10, **caractérisé en ce qu'**il comprend au moins un bras robotisé et des commandes et entraînements permettant de faire fonctionner ces bras robotisés.

12. Système selon l'une des revendications 10 ou 11, **caractérisé en ce qu'**il comprend de plus au moins un automate de pipetage et/ou de délivrance.

13. Procédé d'aspiration de fluides (2) depuis des puits (3) et/ou des espaces d'extraction (4) de plaques SPE (5) pour l'extraction en phase solide et l'élution de particules organiques ou inorganiques
- ces espaces d'extraction (4) présentant chacun, disposée dans la partie inférieure (6) des puits (3), une sortie (8) comportant une paroi annulaire (7), avec une ouverture de sortie (9) - et on utilise un dispositif (1) qui comprend au moins une chambre d'aspiration (11) délimitée par des moyens périphériques (10) ; au moins une ouverture de réception (12), disposée dans une partie des moyens périphériques (10) et ayant une zone de bordure (13) qui peut permettre l'étanchéité contre l'atmosphère environnante (14) par le placement d'au moins une partie d'une telle plaque SPE (5) ; et au moins une conduite de dépression, menant à la chambre d'aspiration (11) et pouvant être reliée à une pompe d'aspiration, destinée à faire le vide dans la chambre d'aspiration (11) et un corps d'aspiration (18) comportant un certain nombre d'ouvertures d'aspiration (19), ces ouvertures d'aspiration (19) correspondant, en nombre et en répartition, au nombre et à la répartition des ouvertures de sortie (9) des puits (3) et/ou des espaces d'extraction (4) d'une plaque SPE (5) placée sur les zones de bordure (13), et où la paroi annulaire (7) de chacune de ces sorties (8) peut être positionnée vis-à-vis d'une ouverture d'aspiration (19) de façon telle qu'elle forme avec cette ouverture d'aspiration (19) une fente annulaire (20), **caractérisé en ce que** le dispositif (1) comprend un espace intermédiaire (21) dans lequel on peut faire le vide exclusivement par les ouvertures d'aspiration (19), ledit espace intermédiaire étant défini par le corps d'aspiration (18), la partie inférieure de la plaque SPE (5) et les moyens périphériques (10), où le corps d'aspiration (18) est disposé contre les moyens périphériques (10) de façon à permettre l'étanchéité, et où après l'aspiration des fluides (2) depuis les puits (3) et/ou les espaces d'extraction (4) des plaques SPE (5), un gaz de balayage est directement introduit dans cet espace intermédiaire (21) par une soupape d'aération (22) qui comprend les moyens périphériques (10).

14. Procédé selon la revendication 13, **caractérisé en ce que** l'on utilise un dispositif (1) selon l'une des revendications 2 à 9 ou un système selon l'une des revendications 10 à 12.

15. Procédé selon la revendication 13 ou 14, **caractérisé en ce que** le corps d'aspiration (18) et la plaque SPE (5) avec ce dispositif (1) sont disposés l'un par rapport à l'autre de façon telle que les parois annulaires (7) de la plaque SPE (5) plongent selon une étendue prédéterminée dans les ouvertures d'aspiration (19) du corps d'aspiration (18), de sorte que les fentes annulaires (20) sont ouvertes ou fermées.

16. Procédé selon la revendication 15, **caractérisé en ce qu'**après le lavage, la soupape d'aération (22) est ouverte ; un gaz de balayage est introduit dans l'espace intermédiaire (21) et on génère de ce fait un courant de gaz important dans les fentes annulaires (20) ouvertes en permanence.

17. Procédé selon la revendication 15, **caractérisé en ce qu'**après le lavage, la soupape d'aération (22) est ouverte ; un gaz de balayage est introduit dans l'espace intermédiaire (21) jusqu'à ce qu'y règnent des conditions de pression atmosphérique ; la plaque SPE (5) est retirée et un courant de gaz important est généré de ce fait dans les fentes annulaires (20) qui ne s'ouvrent qu'alors.

18. Procédé selon l'une des revendications 16 ou 17, **caractérisé en ce que** l'ouverture de la soupape d'aération (22) et/ou l'enlèvement de la plaque SPE (5) est exécuté par un bras du robot destiné au transport des plaques SPE (5).
